# EUROPÄISCHE PATENTSCHRIFT

(11) **EP 3 186 129 B1**
(45) Veröffentlichungstag und Bekanntmachung des Hinweises auf die Patenterteilung: **16.09.2020**
(21) Anmeldenummer: 15790053.1
(22) Anmeldetag: 22.10.2015
(51) Int. Cl.: B61L 3/00, B61L 15/00

(54) **VERFAHREN ZUM BETREIBEN EINES FAHRZEUGS**
METHOD FOR OPERATING A VEHICLE
PROCÉDÉ PERMETTANT DE FAIRE FONCTIONNER UN VÉHICULE

(30) Priorität: 28.10.2014 DE 102014221964
(43) Veröffentlichungstag der Anmeldung: 05.07.2017
(73) Patentinhaber: Siemens Mobility GmbH, 81739 München (DE)
(72) Erfinder: FRENZKE, Thorsten, 91056 Erlangen (DE); GIEBEL, Sascha, 91058 Erlangen (DE)
(86) Internationale Anmeldenummer: PCT/EP2015/074505
(87) Internationale Veröffentlichungsnummer: WO 2016/066523

(56) Entgegenhaltungen:
- EP-A2- 1 897 745
- DE-A1-102009 023 704
- US-A1- 2012 316 717

## Beschreibung

Die Erfindung betrifft ein Verfahren zum Betreiben eines Fahrzeugs, welches eine Antriebseinheit, eine Fahrdatenermittlungseinheit, einen Verbrauchersatz und eine Leistungsverwaltungseinheit aufweist, die zur Verwaltung des Verbrauchersatzes vorgesehen ist, bei welchem die Fahrdatenermittlungseinheit Fahrkurvendaten bestimmt und die Antriebseinheit auf der Grundlage der Fahrkurvendaten gesteuert wird.

Bei motorgetriebenen Fahrzeugen wird üblicherweise ein möglichst geringer Energieverbrauch angestrebt. Hierzu sind sogenannte Fahrerassistenzsysteme bereits vorgeschlagen worden, welche Fahrempfehlungen für den Fahrzeugführer ausgeben. Zur Erzeugung dieser Empfehlungen werden zum Beispiel sogenannte Fahrkurven ermittelt, welche das Ergebnis einer Optimierung des Energieverbrauchs der Antriebseinheit unter vorgegebenen Randbedingungen bezüglich eines Streckenprofils und einer Fahrzeit sind.

In Bezug auf den Energieverbrauch von Nebenverbrauchern wird dieser herkömmlicherweise durch eine Leistungsverwaltungseinheit (auch "Bordnetzmanagement" genannt) verwaltet.

US 2012/0316717 A1 beschreibt ein Steuersystem mit einer Steuerung und einem Energieverwaltungssystem. Die Steuerung ist an Bord des Fahrzeugs angeordnet. Das Fahrzeug umfasst einen Motor zum Antrieb des Fahrzeugs entlang einer Route während einer Fahrt sowie eine Energiespeichervorrichtung zum Speichern elektrischer Energie, die zur Versorgung des Motors verwendet wird. Die Steuerung ist ausgebildet, den Betrieb des Motors gemäß einem Fahrtplan zu steuern. Das Energieverwaltungssystem ist ausgebildet, erwartete elektrische Lasten bei der Versorgung des Motors für die Fahrt entlang eines Abschnitts der Route zu berechnen. Das Energieverwaltungssystem ist weiter ausgebildet, einen Bedarf an einer elektrischen Energie für die Versorgung des Fahrzeugs auf Basis der Erwartung zu bestimmen.

EP 1 897 745 A2 beschreibt ein System zum Führen eines Fahrzeugs auf Basis eines Referenz-Ladungsmengen-Musters.

DE 10 2009 023 704 A1 beschreibt ein Verfahren zur Information von Fahrpersonal in einem Schienenfahrzeug über ein Darstellungsmittel und eine Datenverarbeitungseinheit. In der Datenverarbeitungseinheit werden zumindest Daten über die erfasste aktuelle Position sowie gespeicherte Streckendaten verarbeitet. Zudem können Daten über den Leistungsbedarf von Nebenaggregaten in dem Schienenfahrzeug erfasst werden und gegebenenfalls auch entsprechende Vorhersagen über zukünftigen Leistungsbedarf getätigt werden.

Der Erfindung liegt die Aufgabe zugrunde, das Verfahren dahingehend zu verbessern, dass eine Optimierung hinsichtlich eines definierten Gütekriteriums unter Mitberücksichtigung des Verbrauchersatzes erreicht werden kann.

Hierzu wird ein Verfahren nach Anspruch 1 und ein Fahrzeug nach Anspruch 10 vorgeschlagen Dadurch kann ein zukünftiger Leistungsbedarf des Verbrauchersatzes vorteilhaft bei der Bestimmung von Fahrkurvendaten berücksichtigt werden, wobei gegenüber herkömmlichen Fahrerassistenzsystemen eine weitere Optimierung eines Gütekriteriums erreicht werden kann.

Ein zu optimierendes Gütekriterium ist vorzugsweise der Gesamtenergieverbrauch des Fahrzeugs. Es kann jedoch von einer anderen Größe, wie z.B. der Spitzenleistung, der Reichweite des Fahrzeugs, der Fahrzeit für eine gegebene Strecke, einem Emissionswert, insbesondere einem Lärmemissionswert oder einer weiteren, dem Fachmann als sinnvoll erscheinenden Größe gebildet sein. Das Gütekriterium kann außerdem durch eine Kombination mehrerer der genannten Größen gegeben sein.

Unter einem "Verbraucher" soll zumindest eine Komponente zur Erfüllung einer bestimmten Verbraucherfunktion oder ein Verbund von Komponenten, die zur Erfüllung einer bestimmten Verbraucherfunktion im Zusammenwirken vorgesehen sind, verstanden werden. Der "Verbrauchersatz" umfasst zumindest einen Verbraucher, vorzugsweise eine Gruppe von Verbrauchern. Dem Verbrauchersatz ist demnach zumindest eine Verbraucherfunktion, vorzugsweise mehrere Verbraucherfunktionen zugeordnet. Typische Verbraucherfunktionen sind - beispielsweise und nicht ausschließlich - das Klimatisieren und/oder das Belüften eines Raumes des Fahrzeugs, das Erzeugen einer Druckluft oder das Laden eines elektrischen Energiespeichers. Ein Verbraucher kann auch in der fachmännischen Sprache als "Hilfsbetrieb" oder - gegenüber der Antriebseinheit - "Nebenverbraucher" genannt werden. Bei den Verbrauchern handelt es sich vorzugsweise um elektrische Komponenten. Die Erfindung lässt sich aber auch auf nichtelektrische Verbraucher anwenden, z.B. Nebenverbraucher, denen mechanisch oder thermisch von der Antriebseinheit Energie zugeführt wird.

Zur Versorgung des Verbrauchersatzes mit elektrischer Energie ist vorzugsweise ein sogenanntes Bordnetz vorgesehen. Ist die Antriebseinheit mit zumindest einem elektrischen Motor ausgestattet und bezieht sie eine elektrische Energie aus einem Zwischenkreis, wird das Bordnetz vorzugsweise mittels einer an den Zwischenkreis angeschlossenen Leistungsversorgungseinheit, insbesondere in der Form einer Umrichtereinheit, mit elektrischer Leistung versorgt.

Ein Verwaltungsvorgang der Leistungsverwaltungseinheit, die dem Verbrauchersatz zugeordnet ist, umfasst zweckmäßigerweise zumindest das Ermitteln einer für den Verbrauchersatz bzw. ein zugeordnetes Bordnetz zur Verfügung stehenden Leistung und das Einleiten von Steuervorgängen des Verbrauchersatzes derart, dass der Betrieb des Verbrauchersatzes an diese Leistung angepasst ist. Weist der Verbrauchersatz eine Gruppe von Verbrauchern auf, dienen diese durch die Leistungsverwaltungseinheit eingeleiteten Steuervorgänge vorteilhafterweise dazu, die zur Verfügung stehende Leistung auf die Verbraucher des Satzes zu verteilen.

Unter einer "Fahrkurve" soll insbesondere der Verlauf einer dynamischen Kenngröße des Fahrzeugs gegen eine Positionskenngröße verstanden werden. Diese Positionskenngröße dient dazu, die Position des Fahrzeugs entlang einer im Voraus bekannten und zu befahrenden Strecke zu bestimmen. Sie kann als Ortskenngröße - z.B. ein Abstand zu einem Streckenanfang bzw. einem Streckenende oder ein Streckenkilometer bzw. Streckenhektometer - oder als eine Zeit ausgebildet sein. Die dynamische Kenngröße, welche gegen die Positionskenngröße aufgetragen ist, kann die Beschleunigung oder die Geschwindigkeit des Fahrzeugs, eine Zug- bzw. Bremskraft oder eine Traktions- bzw. Bremsleistung sein. Eine Fahrkurve wird vorzugsweise durch die Angabe einer Folge von Betriebsphasen bestimmt. Mögliche Betriebsarten für eine Betriebsphase sind insbesondere eine Beschleunigung, ein Beharren, ein Ausrollen, eine Bremsung und ein Stillstand. Eine Ausrollphase und eine Bremsphase können dabei unter dem Oberbegriff "Verlangsamungsphase" zusammengefasst werden, bei welcher die Geschwindigkeit des Fahrzeugs abnimmt. Eine Betriebsphase wird zumindest durch die Angabe einer Betriebsart und zumindest eines Werts der Positionskenngröße definiert, welcher insbesondere zumindest den Anfang der Betriebsphase bestimmt. Vorteilhaft kann ein Intervall der Positionskenngröße, insbesondere eine Zeitdauer, für die Betriebsphase angegeben werden. Eine Beschleunigungsphase und eine Bremsphase können außerdem durch einen Beschleunigungswert bzw. eine Bremswirkung - z.B. in der Form einer Bremsleistung oder einer Bremskraft - weiter charakterisiert werden.

Der Ermittlung von Fahrkurvendaten liegt zweckmäßigerweise zumindest ein Optimierungsverfahren zugrunde. Diese Optimierung erfolgt unter vorgegebenen Randbedingungen ein Streckenprofil und einen Fahrplan betreffend. Streckendaten und Fahrplandaten sind daher vorteilhafterweise als Eingangsdaten für das Optimierungsverfahren ausgebildet. Fahrkurvendaten, die von der Fahrdatenermittlungseinheit ermittelt werden, sind vorzugsweise das Ergebnis einer Optimierung zumindest des Energieverbrauchs der Antriebseinheit.

Die Antriebseinheit kann auf der Grundlage der Fahrkurvendaten gesteuert werden, indem diese von einer Steuereinrichtung zu einer automatischen Steuerung herangezogen werden oder zum Erzeugen von dem Fahrzeugführer auszugebenden Fahrempfehlungen dienen. Im letztgenannten Fall wird die Antriebseinheit anhand der auf der Grundlage der Fahrkurvendaten erzeugten Fahrempfehlungen vom Fahrzeugführer manuell gesteuert.

Unter einem "Lastprofil" soll insbesondere der Verlauf zumindest einer Verbrauchkenngröße gegen die Positionskenngröße, vorzugsweise gegen eine Fahrzeit, verstanden werden. Die Verbrauchkenngröße ist insbesondere als Leistungskenngröße ausgebildet. "Vorausschauende" Lastprofildaten sind Daten eines zukünftigen Lastprofils, welches auf einen noch zu befahrenden Streckenabschnitt bezogen ist. Die Lastprofildaten beziehen sich vorzugsweise auf den Gesamtleistungsbedarf des Verbrauchersatzes bzw. eines zugeordneten Bordnetzes, wobei die Ermittlung von Lastprofildaten zum jeweiligen Leistungsbedarf einzelner Verbraucher ebenfalls denkbar ist.

Gemäß einer vorteilhaften Ausbildung der Erfindung wird vorgeschlagen, dass die an die Fahrdatenermittlungseinheit übermittelten Bestimmungsdaten den Lastprofildaten entsprechen und die Fahrdatenermittlungseinheit die Fahrkurvendaten abhängig von den Lastprofildaten ermittelt. In dieser Ausführung umfasst das Bestimmen der Fahrkurvendaten durch die Fahrdatenermittlungseinheit das Ermitteln dieser auf der Grundlage der Lastprofildaten. Dabei werden die von der Leistungsverwaltungseinheit ermittelten vorausschauenden Lastprofildaten zweckmäßigerweise als Eingangsdaten eines durch die Fahrdatenermittlungseinheit durchgeführten Optimierungsverfahrens benutzt.

Erfindungsgemäß ermittelt die Fahrdatenermittlungseinheit Datensätze mit alternativen Fahrkurvendaten. Die Datensätze werden an die Leistungsverwaltungseinheit übermittelt. Abhängig von den Lastprofildaten wird einer der Datensätze ausgewählt. Die Bestimmungsdaten sind für den ausgewählten Datensatz charakteristisch. In dieser Ausführung werden zweckmäßigerweise in einem ersten Schritt Datensätze ermittelt, die Ergebnisse einer Optimierung eines Energieverbrauchs der Antriebseinheit sind. Der Funktionsumfang der Leistungsverwaltungseinheit umfasst dabei vorteilhafterweise das Ermitteln des Datensatzes, der zu einem minimalen Energiebedarf für den Verbrauchsatz führt. Dieser Energiebedarf ist vorzugsweise der Gesamtenergiebedarf des Verbrauchersatzes. Dadurch kann mit der Auswahl des geeigneten Datensatzes den Gesamtenergiebedarf für Traktion und Verbrauchersatz bzw. Bordnetz optimiert werden. Die Bestimmungsdaten weisen zweckmäßigerweise zumindest einen Informationsgehalt auf, welcher zu einem Bestimmen des für die Steuerung der Antriebseinheit anzuwendenden Datensatzes durch die Fahrdatenermittlungseinheit ausreicht.

Außerdem wird vorgeschlagen, dass die Datensätze mit alternativen Fahrkurvendaten für eine bestimmte zu befahrende Strecke unter der Bedingung einer vorgegebenen Fahrzeit ermittelt werden. Hierdurch kann eine Optimierung unter Einhaltung von fahrplanbezogenen Randbedingungen erfolgen.

Gemäß einer vorteilhaften Weiterbildung der Erfindung wird vorgeschlagen, dass bei der Bestimmung der Fahrkurvendaten durch die Fahrdatenermittlungseinheit Verlangsamungskurvendaten abhängig von den Bestimmungsdaten bestimmt werden. Dies eignet sich insbesondere für eine Ausbildung der Antriebseinheit mit zumindest einen elektrischen Bremsmodus auf, in welchem in einem Bremsvorgang die kinetische Energie des Fahrzeugs in eine elektrische Energie umgewandelt wird, welche für einen Betrieb des Verbrauchersatzes benutzt werden kann. Unter den verschiedenen Betriebsphasen hat in diesem Zusammenhang eine Verlangsamungsphase einen wesentlichen Einfluss auf eine für den Betrieb des Verbrauchersatzes zur Verfügung stehende Energie, da von der Antriebseinheit in dieser Phase keine elektrische Energie bezogen wird oder die kinetische Energie des Fahrzeugs in elektrische Energie umgewandelt wird. Das generatorische Bremsen ist jedoch meist dadurch charakterisiert, dass eine hohe Leistung innerhalb einer kurzen Zeitdauer von der Antriebseinheit abgegeben wird. Wenn keine oder nur eine eingeschränkte Rückspeisemöglichkeit in ein Versorgungsnetz vorhanden ist und die Bremsenergie auf dem Fahrzeug nicht genutzt oder zwischengespeichert werden kann, muss sie in Wärme umgewandelt werden. Es ist daher von besonderem Vorteil, wenn die Lastprofildaten der Leistungsverwaltungseinheit bei der Bestimmung von Verlangsamungskurvendaten, insbesondere Bremskurvendaten berücksichtigt werden und eine Verlangsamungsphase, insbesondere eine Bremsphase des Fahrzeugs dadurch hinsichtlich des Energieverbrauchs des Verbrauchersatzes optimiert wird.

Werden wie oben beschrieben Datensätze mit alternativen Fahrkurvendaten ermittelt, wird in diesem Zusammenhang vorgeschlagen, dass sich die Fahrkurvendaten der Datensätze zumindest durch Verlangsamungskurvendaten voneinander unterscheiden. Es kann insbesondere eine Optimierung der Rechenleistung bei der Ermittlung der Fahrkurvendaten erreicht werden, wenn das Ermitteln von Fahrkurvenalternativen gezielt auf eine Verlangsamungsphase, insbesondere eine Bremsphase des Fahrzeugs gerichtet wird. In einer besonderen Ausführung können sich die alternativen Fahrkurvendaten ausschließlich durch Verlangsamungskurvendaten voneinander unterscheiden.

Alternativ oder zusätzlich können bei der Bestimmung der Fahrkurvendaten durch die Fahrdatenermittlungseinheit Beschleunigungskurvendaten abhängig von den Bestimmungsdaten bestimmt werden. Dies ist insbesondere in einer Ausführung vorteilhaft, bei welcher das zu optimierende Gütekriterium zumindest die Spitzenleistung des Fahrzeugs umfasst.

Außerdem wird vorgeschlagen, dass auf der Grundlage der Verlangsamungskurvendaten zumindest eine der folgenden Betriebsphasen steuerbar ist: Ausrollphase, Bremsphase gemäß einer ersten Bremswirkungsstufe, Bremsphase gemäß einer zumindest zweiten Bremswirkungsstufe. Eine Kenngröße für die Bremswirkung kann dabei eine Bremskraft oder eine Bremsleistung sein. Eine Bremswirkungsstufe kann dabei einer Stufe entsprechen, die üblicherweise vom Fahrzeugführer mittels eines Bedienelements einstellbar ist.

Gemäß einer vorteilhaften Ausführung der Erfindung wird vorgeschlagen, dass der Verbrauchersatz zumindest eine Ladeeinheit zum Laden eines Energiespeichers des Fahrzeugs aufweist, wobei die Leistungsverwaltungseinheit Energiezustandsdaten vom Energiespeicher empfängt und zumindest auf der Basis der Verbraucherdaten und der Energiezustandsdaten die vorausschauenden Lastprofildaten ermittelt. Dadurch kann das Lastprofil, welches bei der Bestimmung der Fahrkurvendaten berücksichtigt wird, eine im Energiespeicher zur Verfügung stehende Energie berücksichtigen. Ja nach Ladezustand des Energiespeichers können die Möglichkeiten eines Energiebezugs aus dem Energiespeicher oder einer Energieeinspeisung in den Energiespeicher mittels der Ladeeinheit bei der Ermittlung des Lastprofils berücksichtigt werden.

Die von der Leistungsverwaltungseinheit ermittelten Lastprofildaten können auf einen voraussichtlichen Verbrauch des Verbrauchersatzes bezogen sein, der von einem tatsächlichen Verbrauch abweichen kann. Vorteilhaft ist jedoch eine Ausführung, bei welcher die Lastprofildaten Daten eines zu folgenden Lastprofils des Verbrauchersatzes sind. Hierzu wird vorgeschlagen, dass der Verbrauchersatz gemäß den Lastprofildaten gesteuert wird.

Die Erfindung eignet sich insbesondere für Fahrzeuge, für welche ein Fahrtverlauf über große Zeitspannen in der Form einer Fahrkurve vorhersehbar ist. Darunter sollen insbesondere Zeitspannen von über einer Minute, insbesondere über fünf Minuten und besonders bevorzugt über zehn Minuten verstanden werden. Das erfindungsgemäße Verfahren kann daher vorteilhaft bei Straßenfahrzeugen angewendet werden, die während der Zeitspanne eine von weiteren Fahrzeugen wenig frequentierte Strecke oder eine eigene reservierte Strecke nutzen. Besonders vorteilhaft ist die Anwendung bei Schienenfahrzeugen, insbesondere des Regional- oder Fernverkehrs beim Personentransport oder des Güterverkehrs.

Die Erfindung geht ferner aus von einem Fahrzeug mit einer Antriebseinheit, einer Fahrdatenermittlungseinheit, die zur Bestimmung von Fahrkurvendaten vorgesehen ist, einem Verbrauchersatz und einer Leistungsverwaltungseinheit, die zur Verwaltung des Verbrauchersatzes vorgesehen ist, wobei die Antriebseinheit auf der Grundlage der Fahrkurvendaten steuerbar ist.

Es wird vorgeschlagen, dass die Leistungsverwaltungseinheit mit dem Verbrauchersatz datentechnisch verbunden ist und dazu vorgesehen ist, zumindest auf der Basis von Verbraucherdaten des Verbrauchersatzes vorausschauende Lastprofildaten zu ermitteln, eine Verbindung zwischen der Leistungsverwaltungseinheit und der Fahrdatenermittlungseinheit vorgesehen ist, über welche abhängig von den Lastprofildaten Bestimmungsdaten an die Fahrdatenermittlungseinheit übertragbar sind und die Fahrdatenermittlungseinheit dazu vorgesehen ist, abhängig von den Bestimmungsdaten die Fahrkurvendaten zu bestimmen. Durch die vorgeschlagene Datenkommunikation von der Leistungsverwaltungseinheit zur Fahrdatenermittlungseinheit kann der Leistungsbedarf des Verbrauchersatzes vorteilhaft bei der Bestimmung von Fahrkurvendaten berücksichtigt werden, wobei gegenüber herkömmlichen Fahrerassistenzsystemen eine weitere Optimierung eines Gütekriteriums erreicht werden kann. Zu den weiteren vorteilhaften Wirkungen des vorgeschlagenen Fahrzeugs wird auf die obigen Ausführungen zum erfindungsgemäßen Verfahren verwiesen.

Es werden Ausführungsbeispiele der Erfindung anhand der Zeichnungen näher erläutert. Es zeigen:
- Figur 1:: ein Schienenfahrzeug mit einer Fahrdatenermittlungseinheit zur Bestimmung von Fahrkurvendaten, einem Verbrauchersatz und einer Leistungsverwaltungseinheit,
- Figur 2:: eine beispielhafte Fahrkurve,
- Figur 3:: die Ermittlung von Fahrkurvendaten auf der Grundlage von Lastprofildaten der Leistungsverwaltungseinheit,
- Figur 4:: die Ermittlung von alternativen Fahrkurvendaten und die Auswahl einer Alternative auf der Grundlage der Lastprofildaten,
- Figur 5:: den alternativen Fahrkurvendaten entsprechende Fahrkurven gegenüber einem Lastprofil des Verbrauchersatzes und
- Figur 6:: die Ermittlung von Fahrkurvendaten auf der Grundlage von Lastprofildaten der Leistungsverwaltungseinheit, welche Energiezustandsdaten eines Energiespeichers berücksichtigt.

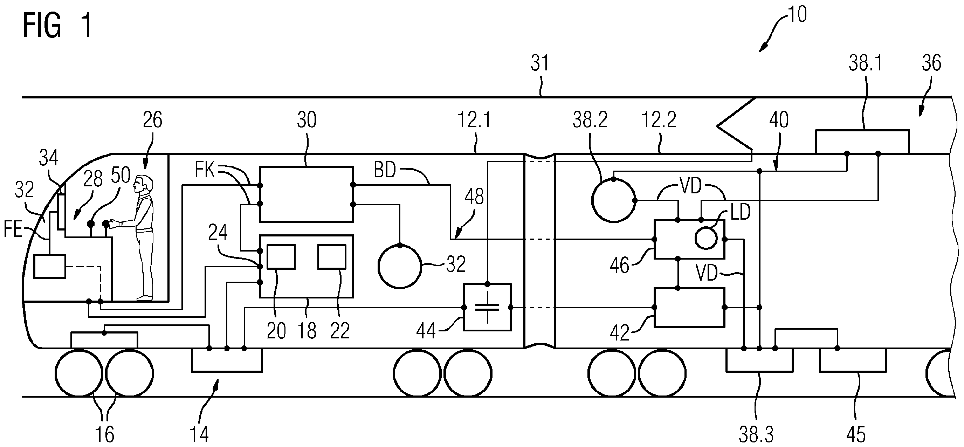

Figur 1 zeigt ein als Schienenfahrzeug 10 ausgebildete Fahrzeug in einer schematischen Seitenansicht. Es ist als ein Verband von Wagen 12 ausgebildet, der in der fachmännischen Sprache "Triebzug" genannt ist. Der Verband ist mit einer Antriebseinheit 14 ausgestattet, welche nicht näher dargestellte elektrische Fahrmotoren umfasst, die jeweils zum Antreiben zumindest einer Triebachse 16 dienen. Die Anzahl der Wagen sowie die Reihenfolge der Triebachsen und Laufachsen sind beispielhaft. Das Schienenfahrzeug 10 bildet in der betrachteten Ausführung eine betrieblich untrennbare Zugeinheit, die mit zumindest einem gattungsgemäßen Schienenfahrzeug im gekoppelten Betrieb betrieben werden kann, wobei die Komponenten der Antriebseinheit 14 über den Verband verteilt sind. Es ist auch denkbar, dass die Komposition voneinander trennbare Traktionswagen, in welchen jeweils eine autarke Antriebseinheit 14 angeordnet ist, und antriebslose Wagen aufweist und nach Bedarf zusammengestellt werden kann. Weiterhin ist denkbar, dass das Schienenfahrzeug 10 als Lokomotive ausgebildet ist.

Die Antriebseinheit 14 kann in einem Traktionsmodus und einem elektrischen Bremsmodus betrieben werden. Hierzu ist eine Steuereinrichtung 18 vorgesehen, die ein Antriebssteuergerät 20 und ein Bremssteuergerät 22 aufweist. Die Steuereinrichtung 18 weist eine Schnittstelle 24 zu einer in einem Führerraum 26 angeordneten Eingabeeinrichtung 28 auf. Diese weist bekannterweise Bedienelemente 50 auf, die an ein sogenanntes Bedienpult 32 angebracht sind. Über diese Bedienelemente 50 können Befehle für die Antriebseinheit 14 eingegeben werden, wie eine gewünschte Traktionsstufe oder eine gewünschte Bremswirkungsstufe, die von den entsprechenden Steuergeräten 20, 22 der Steuereinrichtung 18 umgesetzt werden.

Das Schienenfahrzeug 10 weist außerdem eine Fahrdatenermittlungseinheit 30 auf, welche dazu vorgesehen ist, Fahrkurvendaten FK zu bestimmen. Die Fahrdatenermittlungseinheit 30 wird in der fachmännischen Sprache auch "Fahrerassistenzsystem" genannt. Der Funktion der Fahrdatenermittlungseinheit 30 liegt zumindest ein Optimierungsverfahren zugrunde, welches dazu dient, die während einer Fahrt von einer externen Netzversorgung 31 bezogene Energie zu minimieren. Diese Optimierung erfolgt unter vorgegebenen Randbedingungen, die zumindest auf eine im Voraus bekannte Streckentopologie und einen Fahrplan bezogen sind. Entsprechende Daten, die von der Fahrdatenermittlungseinheit 30 zur Ausführung des Optimierungsverfahrens herangezogen werden, sind in einer Datenbank 32 gespeichert. In der betrachteten Ausführung ist die Datenbank 32 an Bord des Schienenfahrzeugs 10 angeordnet, wobei eine Anordnung von zumindest einem Teil der Datenbank auf der Landseite ebenfalls denkbar ist. Es werden von der Fahrdatenermittlungseinheit 30 zumindest auf der Grundlage dieser Daten Fahrkurvendaten FK ermittelt. Diese Fahrkurvendaten FK entsprechen Daten eines Profils der gegen die Zeit T aufgetragenen Fahrzeuggeschwindigkeit V, wobei das Profil in unterschiedlichen Betriebsphasen unterteilt ist. Mögliche Betriebsphasen sind hierbei: Beschleunigungsphase A, Beharrphase B, Rollphase C, Bremsphase D und Standphase E. Die Betriebsphasen "Rollphase" C und "Bremsphase" D gehören einer übergeordneten "Verlangsamungsphase" VP. Die Betriebsphasen "Beschleunigungsphase" und "Bremsphase" können außerdem in weiteren Betriebsphasen unterteilt werden, die sich auf die Traktionswirkung bzw. Bremswirkung beziehen. Dies wird unten näher erläutert.

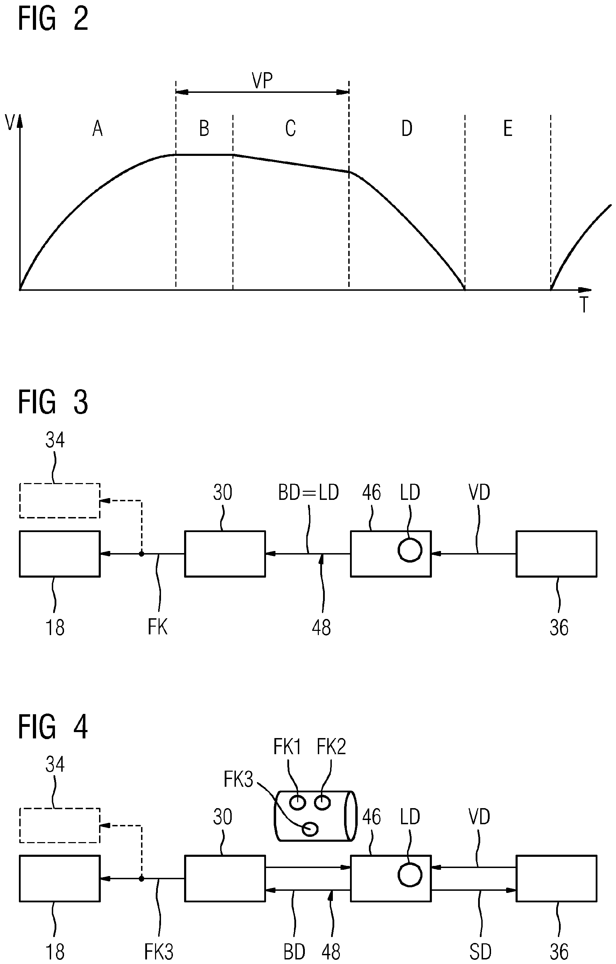

Ein Beispiel für ein derartiges Profil ist in Figur 2 gezeigt. Alternativ oder zusätzlich kann auf der Grundlage der Fahrkurvendaten FK ein Profil der Fahrzeuggeschwindigkeit V gegen den Ort bzw. der Fahrzeugposition gebildet werden.

Fahrkurvendaten FK, die von der Fahrdatenermittlungseinheit 30 ermittelt werden, dienen zur Steuerung der Antriebseinheit 14. Gemäß einem ersten Steuermodus werden auf der Grundlage der Fahrkurvendaten FK Fahrempfehlungen FE erzeugt, die mittels einer Ausgabeeinheit 34 dem Fahrzeugführer ausgegeben werden. In einer typischen Ausführung ist die Ausgabeeinheit 34 als Anzeigeeinheit ausgebildet, wobei eine alternative oder zusätzliche akustische Ausgabe denkbar ist. Der Fahrzeugführer kann über die Bedienelemente 50 anhand der Fahrempfehlungen Befehle manuell eingeben, die von der Steuereinrichtung 18 umgesetzt werden. In einem zweiten Steuermodus werden auf der Grundlage der Fahrkurvendaten FK Befehle für die Antriebseinheit 14 erzeugt, welche durch die Steuereinrichtung 18 automatisch umgesetzt werden. Hierzu sind die Fahrdatenermittlungseinheit 30 und die Steuereinrichtung 18 datentechnisch miteinander verbunden.

Das Schienenfahrzeug 10 weist außerdem einen Satz 36 elektrischer Verbraucher 38 auf. Diese unterscheiden sich von den Komponenten der Antriebseinheit 14 und werden auch "Nebenverbraucher" oder "Hilfsbetriebe" genannt, die an das sogenannte, in Figur 1 stark schematisch dargestellte Bordnetz 40 angeschlossen sind. Dieses Bordnetz 40 wird typischerweise mittels einer Leistungsversorgungseinheit 42 mit Leistung aus einem Zwischenkreis 44 gespeist, an welchen die Antriebseinheit 14 angeschlossen ist. Die Leistungsversorgungseinheit 42 ist typischerweise mit zumindest einem Stromrichter - auch "Bordnetzumrichter" oder "Hilfsbetriebeumrichter" genannt - ausgestattet.

In Figur 1 werden beispielhaft elektrische Verbraucher 38.1, 38.2 und 38.3 des Satzes 36 gezeigt, die als Klimaanlage, Lüftungseinheit bzw. Ladeeinheit eines Energiespeichers 45 ausgebildet sind. Zur leistungstechnischen Verwaltung des Verbrauchersatzes 36 ist eine Leistungsverwaltungseinheit 46 vorgesehen. Diese dient dazu, eine für den Betrieb des Verbrauchersatzes 36 zur Verfügung stehende Gesamtleistung - auch gesamte "Bordnetzleistung" genannt - zu berechnen und eine Leistung - maximal diese Gesamtleistung - auf die elektrischen Verbraucher 38 zu verteilen. Hierzu steht die Leistungsverwaltungseinheit 46 datentechnisch mit den elektrischen Verbrauchern 38 in Verbindung, wobei sie über diese Verbindung Verbraucherdaten VD der elektrischen Verbraucher 38 empfängt. Diese Verbraucherdaten VD dienen dazu, den Leistungsbedarf eines entsprechenden elektrischen Verbrauchers 38 zu charakterisieren. Die leistungstechnische Verwaltung kann neben dieser Datenerfassung die Erzeugung von Befehlen zur Steuerung der elektrischen Verbraucher 38 umfassen, die von einer entsprechenden Verbrauchersteuerung umgesetzt werden. Die Leistungsverwaltungseinheit 46 ist in der betrachteten Ausführung als zentrale Einheit im Schienenfahrzeug 10 ausgebildet, die mit lokalen Verbrauchersteuerungen (nicht gezeigt) verbunden ist. Diese lokalen Verbrauchersteuerungen können jeweils für einen unterschiedlichen Verbraucher 38 oder für eine übergeordnete Gruppe von Verbrauchern 38 - wie z.B. jeweils für die elektrischen Verbraucher 38 eines Wagens 12 - zuständig sein. Die Verbrauchersteuerungen können außerdem gemäß einer weiteren Ausführung in einem Master-Slave-Verhältnis betrieben werden, wobei die oben beschriebene Funktion der Leistungsverwaltungseinheit 46 von einer der Verbrauchersteuerungen ausgeführt wird.

Die Leistungsverwaltungseinheit 46 ist des Weiteren dazu vorgesehen, auf der Basis der Verbraucherdaten VD ein vorausschauendes Lastprofil zu berechnen. Hierzu berechnet die Leistungsverwaltungseinheit 46 den Leistungsbedarf der Verbraucher 38 für mindestens ein Zeitintervall voraus. Dabei wird die aus den Verbraucherdaten VD gewonnene Kenntnis darüber verwendet, welche Verbraucher 38 mit welcher jeweilig zu erwartenden Leistung im Zeitintervall dauerhaft zu- bzw. abgeschaltet sind, zufällig schalten oder gesteuert ein- bzw. ausgeschaltet werden können. Aus den Verbraucherdaten VD können demnach von der Leistungsverwaltungseinheit 46 Lastprofildaten LD ermittelt werden, durch welche ein Lastprofil als eine gegen die Zeit aufgetragene Leistungskurve für das zukünftige Zeitintervall herstellbar ist.

Im elektrischen Bremsmodus werden bekannterweise die Fahrmotoren der Antriebseinheit 14 als Generatoren benutzt, welche eine elektrische Energie in den Zwischenkreis 44 einspeisen. Die Fahrweise, insbesondere die verschiedenen Betriebsphasen des Schienenfahrzeugs 10 beeinflussen daher die für den Betrieb des Verbrauchersatzes 36 zur Verfügung stehende Energie. Es ist vorteilhafterweise eine Verbindung 48 zwischen der Leistungsverwaltungseinheit 46 und der Fahrdatenermittlungseinheit 30 vorgesehen, über welche im Betrieb ein Datenfluss von der Leistungsverwaltungseinheit 46 zur Fahrdatenermittlungseinheit 30 hergestellt ist. Die Verbindung 48 ist in Figur 1 schematisch dargestellt. Es kann sich um eine direkte physikalische Verbindung oder eine logische Verbindung handeln, die über einen Datenbus (nicht gezeigt) hergestellt wird. Der Datenfluss kann direkt zwischen der Leistungsverwaltungseinheit 46 und der Fahrdatenermittlungseinheit 30 oder über weitere intermediäre Einheiten erfolgen.

Diese Verbindung 48 wird dazu benutzt, auf der Grundlage der Lastprofildaten LD erzeugte Bestimmungsdaten BD an die Fahrdatenermittlungseinheit 30 zu übermitteln. Diese Bestimmungsdaten BD werden von der Fahrdatenermittlungseinheit 30 zur Bestimmung der Fahrkurvendaten FK herangezogen. Es werden anhand der Figuren 3 bis 5 zwei Beispiele beschrieben, wobei für jedes Beispiel die Art der Bestimmungsdaten BD und die Bestimmung der Fahrkurvendaten FK durch die Fahrdatenermittlungseinheit 30 erläutert werden.

Ein erstes Beispiel ist in Figur 3 gezeigt. Wie oben bereits beschrieben werden von der Leistungsverwaltungseinheit 46 Verbraucherdaten VD des Verbrauchersatzes 36 empfangen, wobei diese auf deren Basis vorausschauende Lastprofildaten LD ermittelt. In der betrachteten Ausführung bilden diese Lastprofildaten LD die Bestimmungsdaten BD, welche an die Fahrdatenermittlungseinheit 30 über die Verbindung 48 übermittelt werden. Hiermit werden Informationen über das zukünftige Lastprofil des Verbrauchersatzes 36 an die Fahrdatenermittlungseinheit 30 übertragen. Das Optimierungsverfahren der Fahrdatenermittlungseinheit 30 ermittelt dann die Fahrkurvendaten FK auf der Basis der Lastprofildaten LD. Dadurch wird der Verlauf des Leistungsbedarfs des Verbrauchersatzes 36 bei der Ermittlung der optimalen Fahrkurve berücksichtigt. Insbesondere wird eine oder mehrere Bremsphasen D derart bestimmt, dass ein Maximum am Leistungsbedarf des Verbrauchersatzes 36 durch die im elektrischen Bremsmodus der Antriebseinheit 14 erzeugte Energie gedeckt wird. Ist z.B. für eine bestimmte Zeitspanne ein erhöhter Leistungsbedarf vorgesehen, soll eine elektrische Bremsphase D bevorzugt in dieser Zeitspanne und mit einer angepassten Bremswirkung erfolgen. Die Fahrdatenermittlungseinheit 30 in deren Bestimmungsphase ermittelt Fahrkurvendaten FK, welche dies berücksichtigt. Die Fahrkurvendaten FK werden auf die Steuereinrichtung 18 zur automatischen Steuerung der Antriebseinheit 14 gegeben bzw. für die Ausgabeeinheit 34 zur Ausgabe von Fahrempfehlungen verarbeitet.

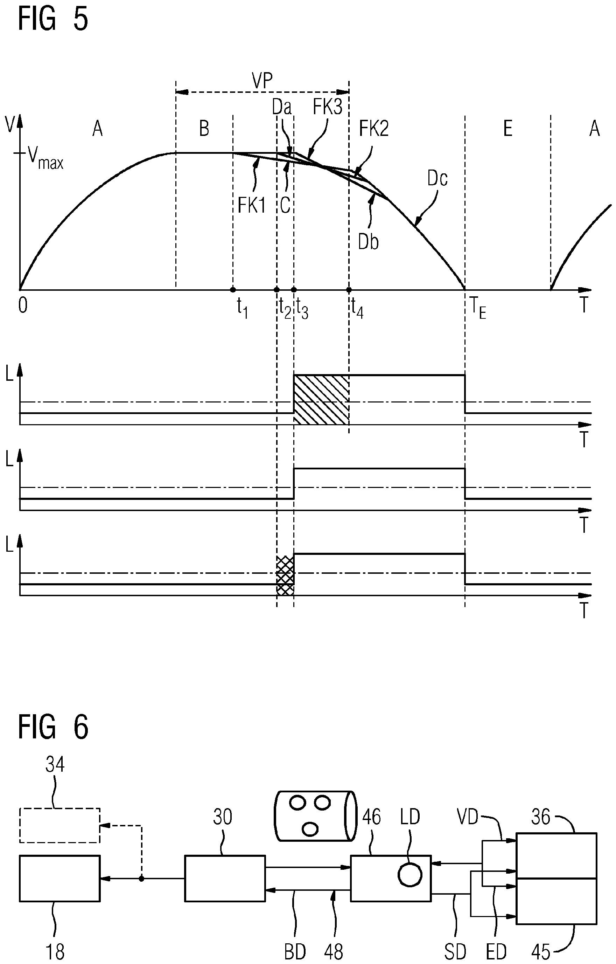

Ein zweites Beispiel wird anhand der Figuren 4 und 5 erklärt. Es unterscheidet sich vom vorherigen Beispiel dadurch, dass die Fahrdatenermittlungseinheit 30 Datensätze mit alternativen Fahrkurvendaten FK1, FK2 und FK3 ermittelt. Die entsprechenden Fahrkurven sind in Figur 5 im oberen Diagramm dargestellt. Die Fahrkurvendaten FK1, FK2, FK3 unterscheiden sich durch ihre jeweilige Verlangsamungsphase VP, in welcher die Fahrzeuggeschwindigkeit V abnimmt. Bei der ersten, auf den Fahrkurvendaten FK1 basierten Fahrkurve wird zu einem Zeitpunkt t₁ eine Ausrollphase C eingeleitet. Bei der zweiten, auf den Fahrkurvendaten FK2 basierten Fahrkurve wird die Beharrphase B mit konstanter Geschwindigkeit Vₘₐₓ bis zu einem späteren Zeitpunkt t₂ aufrechterhalten, zu welchem eine Bremsphase Da mit einer ersten Bremswirkung eingeleitet wird. Bei der dritten, auf den Fahrkurvendaten FK3 basierten Fahrkurve wird die Beharrphase B mit konstanter Geschwindigkeit Vₘₐₓ bis zu einem noch späteren Zeitpunkt t₃ aufrechterhalten, zu welchem eine Bremsphase Db mit einer zweiten Bremswirkung eingeleitet wird. Die zweite Bremswirkung ist größer als die erste Bremswirkung.

Die Ausrollphase C gemäß den Fahrkurvendaten FK1 erfolgt bis zu einem Zeitpunkt t₄ nach dem Zeitpunkt t₃ und geht in eine Bremsphase Dc gemäß einer dritten Bremswirkung über, die größer als die zweite Bremswirkung ist.

Wie dem oberen Diagramm in Figur 5 ebenfalls zu entnehmen werden die Datensätze mit alternativen Fahrkurvendaten FK1, FK2, FK3, insbesondere alternative Verlangsamungsphasen VP, für eine bestimmte zu befahrende Strecke unter der Bedingung einer vorgegebenen Fahrzeit T_{E} ermittelt.

Wie in Figur 4 dargestellt werden die Datensätze mit den alternativen Fahrkurven FK1, FK2, FK3 über die Datenverbindung 48 an die Leistungsverwaltungseinheit 46 übertragen. Diese ermittelt wie oben bereits erörtert die vorausschauenden Lastprofildaten LD auf der Grundlage der Verbraucherdaten VD. Das sich aus den Lastprofildaten LD ergebende Lastprofil des Verbrauchersatzes 36 ist in den unteren Diagrammen der Figur 5 dargestellt. In diesen ist jeweils die vom Verbrauchersatz 36 bezogene Leistung L gegen die Zeit T aufgetragen. Das Lastprofil kennzeichnet sich durch einen im Voraus berechneten Anstieg der Leistung L um den Zeitpunkt t₃ bis zum Zeitpunkt T_{E} des Stillstands. Die Leistungsverwaltungseinheit 46 ermittelt welche der Fahrkurvendaten FK1, FK2, FK3 das höchste Anpassungsgrad an das Lastprofil aufweist.

Bei den ersten Fahrkurvendaten FK1 erfolgt eine Ausrollphase C vom Zeitpunkt t₁ bis den Zeitpunkt t₄, zu welchem in die Bremsphase Dc übergegangen wird. Die aus dem Abbau der kinetischen Energie erzeugte elektrische Energie ist demnach erst ab dem Zeitpunkt t₄ für den Betrieb des Verbrauchersatzes 36 nutzbar. In der Zeitspanne zwischen t₃ und t₄, muss die elektrische Leistung von einer weiteren Quelle, z.B. von einem Energiespeicher und/oder von der Netzversorgung 31 bezogen werden. Diese Leistung ist im ersten der mittleren Diagramme schraffiert dargestellt.

Bei den zweiten Fahrkurvendaten FK2 wird zum Zeitpunkt t₂ vor dem Zeitpunkt t₃ eine Bremsphase Da eingeleitet. Da zum Zeitpunkt t₂ der Energiebedarf des Verbrauchersatzes 36 gering ist, muss ein Teil der generatorisch erzeugten Bremsenergie in einem Bremswiderstand abgebaut werden, falls eine Rückspeisung in das Netz nicht möglich ist. Dies ist durch den schraffierten Bereich im untersten Diagramm der Figur 5 dargestellt.

Bei den dritten Fahrkurvendaten FK3 erfolgt eine Einleitung der Bremsphase Db zum Zeitpunkt t₃, zu welchem der Leistungsbedarf des Verbrauchersatzes 36 steigt. Die Fahrkurvendaten FK3 werden demnach von der Leistungsverwaltungseinheit 46 als optimale Fahrkurvendaten ausgewählt. Diese Auswahl wird der Fahrdatenermittlungseinheit 30 mitgeteilt, indem Bestimmungsdaten BD an diese übermittelt werden. Diese Bestimmungsdaten sind dafür ausreichend, dass die Fahrdatenermittlungseinheit 30 auf der Grundlage der Bestimmungsdaten BD den ausgewählten Datensatz bestimmen kann. In einer einfachen Ausführung wird der ausgewählte Datensatz durch einen Code gekennzeichnet, welcher als Bestimmungsdaten BD zur Bestimmung durch die Fahrdatenermittlungseinheit 30 an diese übermittelt wird. In einer Ausführungsvariante kann der ausgewählte Datensatz zumindest teilweise als Bestimmungsdaten BD der Fahrdatenermittlungseinheit 30 übermittelt werden.

Wie oben bereits beschrieben werden die Fahrkurvendaten FK auf die Steuereinrichtung 18 zur automatischen Steuerung der Antriebseinheit 14 gegeben bzw. für die Ausgabeeinheit 34 zur Ausgabe von Fahrempfehlungen verarbeitet.

Wie in Figur 4 dargestellt erfolgt zudem eine Steuerung des Verbrauchersatzes 36 durch die Leistungsverwaltungseinheit 46. Diese erzeugt Steuerdaten SD, die an entsprechende Verbrauchersteuerungen übermittelt werden. Die entsprechenden Steuerbefehle werden derart bestimmt, dass der Verbrauchersatz 36 möglichst gemäß dem ermittelten vorausschauenden Lastprofil gesteuert wird.

Eine weitere Ausführungsvariante ist in Figur 6 dargestellt. Diese unterscheidet von den oben beschriebenen Ausführungen dadurch, dass die Leistungsverwaltungseinheit 46 Energiezustandsdaten ED des Energiespeichers 45 empfängt und diese bei der Ermittlung der Lastprofildaten LD berücksichtigt.

## Patentansprüche

1. Verfahren zum Betreiben eines Fahrzeugs, welches eine Antriebseinheit (14), eine Fahrdatenermittlungseinheit (30), einen Verbrauchersatz (36) wenigstens eines Nebenverbrauchers und eine Leistungsverwaltungseinheit (46) aufweist, die zur Verwaltung des Verbrauchersatzes (36) vorgesehen ist, bei welchem:
- die Fahrdatenermittlungseinheit (30) Fahrkurvendaten (FK; FK3) bestimmt,
- die Antriebseinheit (14) auf der Grundlage der Fahrkurvendaten (FK; FK3) gesteuert wird,
- die Leistungsverwaltungseinheit (46) Verbraucherdaten (VD) vom Verbrauchersatz (36) empfängt,
- die Leistungsverwaltungseinheit (46) zumindest auf der Basis der Verbraucherdaten (VD) vorausschauende Lastprofildaten (LD) ermittelt,
- abhängig von den Lastprofildaten (LD) Bestimmungsdaten (BD) an die Fahrdatenermittlungseinheit (30) übermittelt werden,
- die Fahrdatenermittlungseinheit (30) abhängig von den Bestimmungsdaten (BD) die Fahrkurvendaten (FK; FK3) bestimmt, **dadurch gekennzeichnet, dass**
- die Fahrdatenermittlungseinheit (30) Datensätze mit alternativen Fahrkurvendaten (FK1, FK2, FK3) ermittelt,
- die Datensätze an die Leistungsverwaltungseinheit (46) übermittelt werden,
- abhängig von den Lastprofildaten (LD) einer der Datensätze ausgewählt wird und
- die Bestimmungsdaten (BD) für den ausgewählten Datensatz charakteristisch sind.

2. Verfahren nach Anspruch 1,
**dadurch gekennzeichnet, dass**
die an die Fahrdatenermittlungseinheit (30) übermittelten Bestimmungsdaten (BD) den Lastprofildaten (LD) entsprechen und die Fahrdatenermittlungseinheit (30) die Fahrkurvendaten (FK) abhängig von den Lastprofildaten (LD) ermittelt.

3. Verfahren nach Anspruch 1 oder 2,
**dadurch gekennzeichnet, dass**
die Datensätze mit alternativen Fahrkurvendaten (FK1, FK2, FK3) für eine bestimmte zu befahrende Strecke unter der Bedingung einer vorgegebenen Fahrzeit (T_{E}) ermittelt werden.

4. Verfahren nach einem der vorhergehenden Ansprüche,
**dadurch gekennzeichnet, dass**
bei der Bestimmung der Fahrkurvendaten (FK; FK3) durch die Fahrdatenermittlungseinheit (30) Verlangsamungskurvendaten abhängig von den Bestimmungsdaten (BD) bestimmt werden.

5. Verfahren nach den Ansprüchen 1 und 4,
**dadurch gekennzeichnet, dass**
sich die Fahrkurvendaten (FK1, FK2, FK3) der Datensätze zumindest durch Verlangsamungskurvendaten voneinander unterscheiden.

6. Verfahren nach Anspruch 4 oder 5,
**dadurch gekennzeichnet, dass**
auf der Grundlage der Verlangsamungskurvendaten zumindest eine der folgenden Betriebsphasen steuerbar ist: Ausrollphase (C), Bremsphase (Da) gemäß einer ersten Bremswirkungsstufe, Bremsphase (Db, Dc) gemäß einer zumindest zweiten Bremswirkungsstufe.

7. Verfahren nach einem der vorhergehenden Ansprüche,
**dadurch gekennzeichnet, dass**
der Verbrauchersatz (36) zumindest eine Ladeeinheit (38.3) zum Laden eines Energiespeichers (45) des Fahrzeugs aufweist, wobei die Leistungsverwaltungseinheit (46) Energiezustandsdaten (ED) vom Energiespeicher (45) empfängt und zumindest auf der Basis der Verbraucherdaten (VD) und der Energiezustandsdaten (ED) die vorausschauenden Lastprofildaten (LD) ermittelt.

8. Verfahren nach einem der vorhergehenden Ansprüche,
**dadurch gekennzeichnet, dass**
der Verbrauchersatz (36) gemäß den Lastprofildaten (LD) gesteuert wird.

9. Verfahren nach einem der vorhergehenden Ansprüche,
**dadurch gekennzeichnet, dass**
das Fahrzeug als Schienenfahrzeug (10) ausgebildet ist.

10. Fahrzeug mit einer Antriebseinheit (14), einer Fahrdatenermittlungseinheit (30), die zur Bestimmung von Fahrkurvendaten (FK; FK3) vorgesehen ist, einem Verbrauchersatz (36) wenigstens eines Nebenverbrauchers und einer Leistungsverwaltungseinheit (46), die zur Verwaltung des Verbrauchersatzes (36) vorgesehen ist, wobei die Antriebseinheit (14) auf der Grundlage der Fahrkurvendaten (FK; FK3) steuerbar ist,
- die Leistungsverwaltungseinheit (46) mit dem Verbrauchersatz (36) datentechnisch verbunden ist und dazu vorgesehen ist, zumindest auf der Basis von Verbraucherdaten (VD) des Verbrauchersatzes (36) vorausschauende Lastprofildaten (LD) zu ermitteln,
- eine Verbindung (48) zwischen der Leistungsverwaltungseinheit (46) und der Fahrdatenermittlungseinheit (30) vorgesehen ist, über welche abhängig von den Lastprofildaten (LD) Bestimmungsdaten (BD) an die Fahrdatenermittlungseinheit (30) übertragbar sind und
- die Fahrdatenermittlungseinheit (30) dazu vorgesehen ist, abhängig von den Bestimmungsdaten (BD) die Fahrkurvendaten (FK; FK3) zu bestimmen,
**dadurch gekennzeichnet, dass**
- die Fahrdatenermittlungseinheit (30) Datensätze mit alternativen Fahrkurvendaten (FK1, FK2, FK3) ermittelt,
- die Datensätze an die Leistungsverwaltungseinheit (46) übermittelt werden,
- abhängig von den Lastprofildaten (LD) einer der Datensätze ausgewählt wird und
- die Bestimmungsdaten (BD) für den ausgewählten Datensatz charakteristisch sind.

11. Fahrzeug nach Anspruch 10,
**gekennzeichnet durch** die Ausbildung als Schienenfahrzeug (10) .

## Claims

1. Method for operating a vehicle which has a drive unit (14), a driving-data determination unit (30), a consumer set (36) of at least one auxiliary consumer and a power management unit (46) which is provided for managing the consumer set (36), in which:
- the driving-data determination unit (30) identifies driving curve data (FK; FK3),
- the drive unit (14) is controlled on the basis of the driving curve data (FK; FK3),
- the power management unit (46) receives consumer data (VD) from the consumer set (36),
- the power management unit (46) determines anticipatory load profile data (LD) at least on the basis of the consumer data (VD),
- identification data (BD) is transmitted to the driving-data determination unit (30) as a function of the load profile data (LD),
- the driving-data determination unit (30) identifies the driving curve data (FK; FK3) as a function of the identification data (BD),
**characterised in that**
- the driving-data determination unit (30) determines data sets including alternative driving curve data (FK1, FK2, FK3),
- the data sets are transmitted to the power management unit (46),
- one of the data sets is selected as a function of the load profile data (LD) and
- the identification data (BD) is characteristic of the selected data set.

2. Method according to claim 1,
**characterised in that**
the identification data (BD) transmitted to the driving-data determination unit (30) corresponds to the load profile data (LD), and the driving-data determination unit (30) determines the driving curve data (FK) as a function of the load profile data (LD).

3. Method according to claim 1 or 2,
**characterised in that**
the data sets, including the alternative driving curve data (FK1, FK2, FK3), are determined for a specific route section to be travelled under the condition of a predetermined travel time (T_{E}).

4. Method according to one of the preceding claims,
**characterised in that**
slowing curve data is identified as a function of the identification data (BD) during the identification of the driving curve data (FK; FK3) by the driving-data determination unit (30).

5. Method according to claims 1 and 4,
**characterised in that**
the driving curve data (FK1, FK2, FK3) of the data sets differs at least with respect to slowing curve data.

6. Method according to claim 4 or 5,
**characterised in that**
at least one of the following operating phases can be controlled on the basis of the slowing curve data: coasting phase (C), braking phase (Da) according to a first braking effect stage, braking phase (Db, Dc) according to an at least second braking effect stage.

7. Method according to one of the preceding claims,
**characterised in that**
the consumer set (36) has at least one charging unit (38.3) for charging an energy storage device (45) of the vehicle, wherein the power management unit (46) receives energy status data (ED) from the energy storage device (45) and determines the anticipatory load profile data (LD) at least on the basis of the consumer data (VD) and the energy status data (ED).

8. Method according to one of the preceding claims,
**characterised in that**
the consumer set (36) is controlled according to the load profile data (LD).

9. Method according to one of the preceding claims,
**characterised in that**
the vehicle is embodied as a rail-borne vehicle (10).

10. Vehicle having a drive unit (14), a driving-data determination unit (30) provided for identifying driving curve data (FK; FK3), a consumer set (36) of at least one auxiliary consumer and a power management unit (46) provided for managing the consumer set (36), wherein the drive unit (14) can be controlled on the basis of the driving curve data (FK; FK3),
- the power management unit (46) has a data connection to the consumer set (36) and is provided to determine anticipatory load profile data (LD) at least on the basis of the consumer data (VD) of the consumer set (36),
- a connection (48) is provided between the power management unit (46) and the driving-data determination unit (30), via which identification data (BD) can be transmitted to the driving-data determination unit (30) as a function of the load profile data (LD) and
- the driving-data determination unit (30) is provided for identifying the driving curve data (FK; FK3) as a function of the identification data (BD),
**characterised in that**
- the driving-data determination unit (30) determines data sets including alternative driving curve data (FK1, FK2, FK3),
- the data sets are transmitted to the power management unit (46),
- one of the data sets is selected as a function of the load profile data (LD) and
- the identification data (BD) is characteristic of the selected data set.

11. Vehicle according to claim 10,
**characterised by** the embodiment as a rail-borne vehicle.

## Revendications

1. Procédé pour faire fonctionner un véhicule, qui a une unité (14) motrice, une unité (30) de transmission de données de circulation, un groupe (36) consommateur, au moins un consommateur auxiliaire et une unité (46) de gestion de puissance prévue pour gérer le groupe (36) consommateur, dans lequel
- l'unité (30) de détermination de données de circulation détermine des données (FK ; FK3) de courbe de circulation,
- on commande l'unité (14) motrice sur la base des données (FK ; FK3) de courbe de circulation,
- l'unité (46) de gestion de puissance reçoit des données (VD) de consommateur du groupe (36) consommateur,
- l'unité (46) de gestion de puissance détermine des données (LD) de profil de charge prévisibles sur la base des données (VD) de consommateur,
- on transmet, en fonction des données (LD) de profil de charge, des données (BD) de détermination à l'unité (30) de détermination de données de circulation,
- l'unité (30) de détermination de données de circulation détermine les données (FK ; FK3) de courbe de circulation en fonction des données (BD) de détermination,
**caractérisé en ce que**
- l'unité (30) de détermination de données de circulation détermine des ensembles de données avec des données (FK1, FK2, FK3) alternatives de courbe de circulation,
- on transmet les ensembles de données à l'unité (46) de gestion de puissance,
- on choisit l'un des ensembles de données en fonction des données (LD) de profil de charge et
- les données (BD) de détermination sont caractéristiques de l'ensemble de données choisies.

2. Procédé suivant la revendication 1,
**caractérisé en ce que**
les données (BD) de détermination transmises à l'unité (30) de détermination de données de circulation correspondent aux données (LD) de profil de charge et l'unité (30) de détermination de données de circulation détermine les données (FK) de courbe de circulation en fonction des données (LD) de profil de charge.

3. Procédé suivant la revendication 1 ou 2,
**caractérisé en ce que**
l'on détermine les ensembles de données avec des données (FK1, FK2, FK3) alternatives de courbe de circulation pour une certaine voie à parcourir sous la condition d'un temps (T_{E}) de parcours donné à l'avance.

4. Procédé suivant l'une des revendications précédentes,
**caractérisé en ce que**,
dans la détermination des données (FK ; FK3) de courbe de circulation par l'unité (30) de détermination de données de circulation, on détermine des données de courbe de décélération en fonction des données (BD) de détermination.

5. Procédé suivant les revendications 1 et 4,
**caractérisé en ce que**
les données (FK1, FK2, FK3) de courbe de circulation se distinguent des ensembles de données au moins par des données de courbe de décélération.

6. Procédé suivant la revendication 4 ou 5,
**caractérisé en ce que**,
sur la base des données de courbe de décélération, au moins l'une des phases de fonctionnement suivantes peut être commandée : phase (C) de roulement sur son erre, phase (Da) de freinage suivant un premier stade d'action de freinage, phase (Db, Dc) de freinage suivant au moins un deuxième stade d'action de freinage.

7. Procédé suivant l'une des revendications précédentes,
**caractérisé en ce que**
le groupe (36) consommateur a au moins une unité (38.3) de charge pour charger un accumulateur (45) d'énergie du véhicule, l'unité (46) de gestion de puissance recevant des données (ED) d'état d'énergie de l'accumulateur (45) d'énergie et déterminant les données (LD) de profil de charge prévisibles au moins sur la base des données (VD) de consommateur et des données (ED) d'état d'énergie.

8. Procédé suivant l'une des revendications précédentes,
**caractérisé en ce que**
le groupe (36) consommateur est commandé suivant les données (LD) de profil de charge.

9. Procédé suivant l'une des revendications précédentes,
**caractérisé en ce que**
le véhicule est constitué sous la forme d'un véhicule (10) ferroviaire.

10. Véhicule ayant une unité (14) motrice, une unité (30) de détermination de données de circulation prévue pour déterminer des données (FK ; FK3) de courbe de circulation, un groupe (36) consommateur, au moins un consommateur auxiliaire et une unité (46) de gestion de puissance prévue pour gérer le groupe (36) consommateur, l'unité (14) motrice pouvant être commandée sur la base des données (FK ; FK3) de courbe de circulation,
- l'unité (46) de gestion de puissance est reliée en technique de données au groupe (36) consommateur et est prévue pour déterminer des données (LD) de profil de charge prévisibles sur la base de données (VD) de consommateur du groupe (36) consommateur,
- il est prévu, entre l'unité (46) de gestion de puissance et l'unité (30) de détermination de données de circulation, une communication (48), par laquelle, en fonction des données (LD) de profil de charge, des données (BD) de détermination peuvent être transmises à l'unité (30) de détermination de données de circulation et
- l'unité (30) de détermination de données de circulation est prévue pour déterminer les données (FK ; FK3) de courbe de circulation en fonction des données (BD) de détermination,
**caractérisé en ce que**
- l'unité (30) de détermination de données de circulation détermine des ensembles de données avec des données (FK1, FK2, FK3) alternatives de courbe de circulation,
- on transmet les ensembles de données à l'unité (46) de gestion de puissance,
- on choisit l'un des ensembles de données en fonction des données (LD) de profil de charge et
- les données (BD) de détermination sont caractéristiques de l'ensemble de données choisies.

11. Véhicule suivant la revendication 10,
**caractérisé par** sa constitution en véhicule (10) ferroviaire.
